# EUROPEAN PATENT SPECIFICATION

(11) **EP 3 551 153 B1**
(45) Date of publication and mention of the grant of the patent: **07.06.2023**
(21) Application number: 17811845.1
(22) Date of filing: 06.12.2017
(51) Int. Cl.: A61G 5/10, G06F 3/01

(54) **METHOD FOR CONTROLLING A WHEELCHAIR, WHEELCHAIR CONTROL SYSTEM FOR MOUNTING ON A WHEELCHAIR, AND A WHEELCHAIR**
VERFAHREN ZUR STEUERUNG EINES ROLLSTUHLS, STEUERUNGSSYSTEM FÜR ROLLSTUHL ZUR MONTAGE AN EINEM ROLLSTUHL SOWIE ROLLSTUHL
PROCÉDÉ DE COMMANDE D'UN FAUTEUIL ROULANT, SYSTÈME DE COMMANDE DE FAUTEUIL ROULANT POUR MONTAGE SUR UN FAUTEUIL ROULANT, ET FAUTEUIL ROULANT

(30) Priority: 07.12.2016 DK PA201670972
(43) Date of publication of application: 16.10.2019
(73) Proprietor: Eyemind ApS, 1655 København V (DK)
(72) Inventor: SØLVMOSE, Martin, 1655 København V (DK)
(74) Representative: COPA Copenhagen Patents
(86) International application number: PCT/DK2017/050411
(87) International publication number: WO 2018/103806

(56) References cited:
- CN-U- 204 863 717
- TR-B- 201 613 586
- US-A1- 2016 004 306

## Description

The present disclosure relates to a method and system for controlling a wheelchair, and in particular for controlling a wheelchair via eye tracking.

### BACKGROUND

The developments within eye-tracking has led to the development of complex eye-control systems, typically requiring a display and/or helmet/goggles.

CN 204 863 717 discloses an eye control system comprising an eye tracking device mounted on a wheelchair, and a feedback device with a feedback area, said eye tracking device determining if the user focuses on an input area and moving the wheelchair according to the wheelchair control signal.

There is however a need for a simple apparatus enabling a user to control a wheelchair and other devices. Known heads-down solutions require the user to focus on a display with keys. The keys change colour or other appearance upon activation. Heads-down solutions suffer from limited view of the user.

### SUMMARY

Accordingly, there is a need for improved methods and systems for controlling a wheelchair and other apparatus.

A method for controlling a wheelchair with an eye control system comprising an eye tracking device mounted on the wheelchair, and a feedback device with a feedback area is provided, wherein the method comprises obtaining eye tracking data of a user of the wheelchair with the eye tracking device; determining a wheelchair control signal and a feedback control signal based on the eye tracking data, wherein determining a wheelchair control signal and a feedback control signal based on the eye tracking data comprises determining if the eye tracking data fulfils a input criterion. The input criterion is fulfilled if the eye tracking data are indicative of the user focusing on an input area, wherein the input area is separate from the feedback area. The method comprises moving the wheelchair according to the wheelchair control signal; and providing feedback to the user in the feedback area according to the feedback control signal.

Further, a wheelchair control system for mounting on a wheelchair is provided, the wheelchair control system comprising an eye tracking device, and an eye control system comprising an eye controller and a wheelchair interface, wherein the eye tracking device is configured to obtain eye tracking data of a user of the wheelchair, and wherein the eye controller is configured to determine a wheelchair control signal and a feedback control signal based on the eye tracking data. To determine a wheelchair control signal and a feedback control signal based on the eye tracking data comprises determining if the eye tracking data fulfils an input criterion. The input criterion is fulfilled if the eye tracking data are indicative of the user focusing on an input area. The input area is separate from a feedback area of a feedback device. The eye controller is configured to transmit the wheelchair control signal to the wheelchair via the wheelchair interface; and transmit the feedback control signal to the feedback device.

Also disclosed is a wheelchair comprising a wheelchair control system as described herein.

Also disclosed is a method for controlling a feeding robot with an eye control system, not forming part of the invention, comprising an eye tracking device. e.g. mounted on the eating robot or in the vicinity thereof, such as a table or plate, and a feedback device with a feedback area, wherein the method comprises: obtaining eye tracking data of a user of the feeding robot with the eye tracking device; determining a feeding robot control signal and a feedback control signal based on the eye tracking data, wherein determining a feeding robot control signal and a feedback control signal based on the eye tracking data optionally comprises determining if the eye tracking data fulfils a input criterion. The input criterion may be fulfilled if the eye tracking data are indicative of the user focusing on a point within an input area. The method for controlling a feeding robot comprises moving a feeding robot arm according to the feeding robot control signal; and providing feedback to the user in the feedback area according to the feedback control signal.

It is an important advantage of the present disclosure that the user does not have to wear special equipment, such as a helmet, goggles, or other head-worn devices for controlling the wheelchair.

Further, it is an important advantage that the user does not need to focus on a display, a solution also known as heads-down.

Further, a simple and durable system is provided, and the method and system provides an improved use of peripheral vision of the user.

### BRIEF DESCRIPTION OF THE DRAWINGS

The above and other features and advantages of the present invention will become readily apparent to those skilled in the art by the following detailed description of exemplary embodiments thereof with reference to the attached drawings, in which:
Fig. 1 shows a wheelchair comprising a wheelchair control system,
Fig. 2 schematically illustrates an exemplary wheelchair control system,
Fig. 3 shows an exemplary flow diagram for a method for controlling a wheelchair,
Fig. 4 shows an exemplary flow diagram for a method for controlling a feeding robot, and
Fig. 5 schematically illustrates an exemplary wheelchair control system.

### DETAILED DESCRIPTION

The present disclosure provides an improved and simple method for eye-control of a wheelchair.

A method for controlling a wheelchair with an eye control system comprising an eye tracking device mounted on the wheelchair, and a feedback device with a feedback area is disclosed.

The feedback device may comprise one or more visual feedback indicators, including a first visual feedback indicator and/or a second visual feedback indicator. A visual feedback indicator may comprise a light-emitting diode (LED) or a set of light-emitting diodes (LED). A first visual feedback indicator may be arranged at a distance from a second visual feedback indicator. The distance between the first visual feedback indicator and the second visual feedback indicator may be at least 3 cm, such as in the range from 4 cm to 10 cm. The distance between the first visual feedback indicator and the third visual feedback indicator may be at least 3 cm, such as in the range from 4 cm to 10 cm. The distance between the second visual feedback indicator and the third visual feedback indicator may be at least 8 cm, such as in the range from 10 cm to 20 cm.

The eye tracking device comprises a number of sensors configured to detect the position of the eye and provide eye tracking data of a user of the wheelchair. The eye tracking data indicates the direction of eye focus in an input area.

The method comprises obtaining eye tracking data of a user of the wheelchair with the eye tracking device. In one or more exemplary methods, the eye tracking data comprises (x,y)-coordinates of an input area.

The method(s) may comprise arranging one or more vision guides in the input area. For example, the method may comprise arranging a first vision guide in the input area, wherein the position of the first vision guide corresponds to the first input area. For example, the method may comprise arranging a second vision guide in the input area, wherein the position of the second vision guide corresponds to the second input area. For example, the method may comprise arranging a third vision guide in the input area, wherein the position of the third vision guide corresponds to the third input area. Accordingly, the wheelchair control system may comprise one or more vision guides arranged in the input area of the eye tracking device.

A vision guide, such as first vision guide, second vision guide and/or third vision guide may comprise an elongated member, such as a rod, with a first end mounted to or mountable to the housing. A marker element may be arranged at a second end of the elongated member. In one or more exemplary methods, the marker elements of vision guides, such as a first marker element of first vision guide, may comprise respective visual feedback indicators. The elongated member(s) of vision guide(s) may have a length of at least 4 cm.

The method comprises determining a wheelchair control signal and a feedback control signal based on the eye tracking data. Determining a wheelchair control signal Xwheel and a feedback control signal Xfeedback based on the eye tracking data optionally comprises determining if the eye tracking data fulfils an input criterion, wherein the input criterion is fulfilled if the eye tracking data are indicative of the user focusing on an input area. In one or more exemplary methods, the input area is separate from the feedback area. The input area may be defined by the field of view or detection area of the eye tracking device. The input area is a virtual input area.

The method comprises moving the wheelchair according to the wheelchair control signal. Moving the wheelchair may comprise moving the wheelchair in a first direction, such as in a forward direction, if a first input criterion is fulfilled, wherein the first input criterion is fulfilled if the eye tracking data are indicative of the user focusing on a first input area, e.g. for at least a first activation time period.

Moving the wheelchair may comprise moving and/or turning the wheelchair in a second direction, such as in a left direction, if a second input criterion is fulfilled, wherein the second input criterion is fulfilled if the eye tracking data are indicative of the user focusing on a second input area, e.g. for at least a second activation time period.

Moving the wheelchair may comprise moving and/or turning the wheelchair in a third direction, such as in a right direction, if a third input criterion is fulfilled, wherein the third input criterion is fulfilled if the eye tracking data are indicative of the user focusing on a third input area, e.g. for at least a third activation time period.

The distance between a first visual feedback indicator and a corresponding first input area may be at least 3 cm, such as at least 5 cm. The distance between the first visual feedback indicator and a corresponding first input area may be at least 10 cm. The distance between a second visual feedback indicator and a corresponding second input area may be at least 3 cm, such as at least 5 cm. The distance between a second visual feedback indicator and a corresponding second input area may be at least 10 cm. The distance between a third visual feedback indicator and a corresponding third input area may be at least 3 cm, such as at least 5 cm. The distance between a third visual feedback indicator and a corresponding third input area may be at least 10 cm.

An activation period, such as the first activation period, the second activation period and/or the third activation period, may be in the range from 100 ms to 1 s. In one or more exemplary methods, an activation period may be in the range from 200 ms to 400 ms. The first activation period may be different from, such as shorter than, the second activation period. The first activation period may be different from, such as shorter than, the third activation period. Thus, more secure movement of the wheelchair may be provided for in that a change in direction may require longer focus than a mere forward movement.

The method may comprise stopping the wheelchair if the eye tracking data are indicative of the user removing the focus from the first input area.

The method comprises providing feedback to the user in the feedback area according to the feedback control signal. Providing feedback to the user in the feedback area may comprise providing a visual feedback to the user.

In one or more exemplary methods, providing feedback to the user may comprise providing a first initial feedback signal, e.g. with a first visual feedback indicator in the feedback area, if the eye tracking data are indicative of a user input, where the user focuses on a first input area, e.g. for at least a first initiation time period. The first initial feedback signal may have a first initial colour, such as red, blue, yellow or green. The first initial feedback signal may have a first initial duty cycle, e.g. in the range from 10% to 90 % with a first initial period length of from 40 ms to 200 ms. Thereby, the user may be notified that the wheelchair is about to move before moving the wheelchair.

In one or more exemplary methods, providing feedback to the user may comprise providing a second initial feedback signal, e.g. with a second visual feedback indicator in the feedback area, if the eye tracking data are indicative of a user input, where the user focuses on a second input area, e.g. for at least a second initiation time period. The second initial feedback signal may have a second initial colour, such as red, blue, yellow or green. The second initial feedback signal may have a second initial duty cycle, e.g. in the range from 10% to 90 % with a second initial period length of from 40 ms to 200 ms.

In one or more exemplary methods, an initiation time period, such as the first initiation time period and/or the second initiation time period, may be in the range from 50 ms to 300 ms, such as 100 ms, 150 ms or 200 ms.

In one or more exemplary methods, providing feedback to the user in the feedback area comprises providing a haptic feedback to the user. In one or more exemplary methods, providing feedback to the user in the feedback area comprises providing an audio feedback to the user.

In one or more exemplary methods, providing feedback to the user comprises providing a first primary feedback signal, e.g. with a first visual feedback indicator in the feedback area, if the eye tracking data are indicative of a user input, where the user focuses on a first input area, e.g. for at least a first primary time period.

The first primary feedback signal may have a first primary colour, such as red, blue, yellow or green. The first primary feedback signal may have a first primary duty cycle, e.g. in the range from 10% to 100 % with a first primary period length of from 40 ms to 200 ms. The first primary feedback signal may be different, e.g. in colour and/or duty cycle, the first initial feedback signal.

In one or more exemplary methods, providing feedback to the user comprises providing a second primary feedback signal, e.g. with a second visual feedback indicator in the feedback area, if the eye tracking data are indicative of a user input, where the user focuses on a second input area, e.g. for at least a second primary time period.

The second primary feedback signal may have a second primary colour, such as red, blue, yellow, or green. The second primary feedback signal may have a second primary duty cycle, e.g. in the range from 10% to 100 % with a second primary period length of from 40 ms to 200 ms. The second primary feedback signal may be different, e.g. in colour and/or duty cycle, from the second initial feedback signal.

Thereby a user may be notified of an activation of moving the wheelchair. One or more of the first initial feedback signal and the first primary feedback signal may be a visual feedback signal having a first colour.

In one or more exemplary methods, moving the wheelchair according to the wheelchair control signal comprises transmitting the wheelchair control signal to a controller interface of a wheelchair controller. Transmitting the wheelchair control signal to a controller interface of wheelchair controller enables simple retrofitting and use of normal joystick control capability of wheelchair.

In one or more exemplary methods, the method may comprise applying a locking mode in the eye control system if a lock input criterion is fulfilled and the eye tracking data are indicative of a user input, where the user focuses on a lock input area for at least a lock activation time period. In one or more exemplary methods, providing feedback to the user comprises providing a lock feedback signal, e.g. with one or more visual feedback indicators, such as comprising a status feedback indicator, in the feedback area, if the eye tracking data are indicative of a user input, where the user focuses on the lock input area for at least a lock activation time period.

The lock feedback signal may have one or more colours, such as red, blue, yellow, and/or green.

In one or more exemplary methods, the method may comprise switching from the lock mode to active mode of the eye control system if an unlock criterion is fulfilled and the eye tracking data are indicative of a user input, where the user focuses on an unlock input area for at least an unlock activation time period. In one or more exemplary methods, providing feedback to the user comprises providing an unlock feedback signal, e.g. with one or more visual feedback indicators, such as comprising a status feedback indicator, in the feedback area, if the eye tracking data are indicative of a user input, where the user focuses on the unlock input area for at least an unlock activation time period.

The unlock feedback signal may have one or more colours, such as red, blue, yellow, and/or green.

The lock input area and the unlock input area may be input areas of the input area. The lock input area and the unlock input area may correspond to each other or at least partly overlap.

The present disclosure also relates to a wheelchair control system. The wheelchair control system may comprise the feedback device, wherein the feedback device is configured to provide feedback to the user in the feedback area according to the feedback control signal. The feedback device may comprise a housing with one or more visual feedback indicators, including a first visual feedback indicator and/or a second visual feedback indicator. A visual feedback indicator may comprise a light-emitting diode (LED) or a set of light-emitting diodes (LED). A first visual feedback indicator may be arranged at a distance from a second visual feedback indicator. The distance between the first visual feedback indicator and the second visual feedback indicator may be at least 3 cm, such as in the range from 4 cm to 10 cm.

The feedback device may comprise a third visual feedback indicator and/or a status visual feedback indicator. The distance between the first visual feedback indicator and the third visual feedback indicator may be at least 3 cm, such as in the range from 4 cm to 10 cm.

The eye tracking device may be accommodated in the housing.

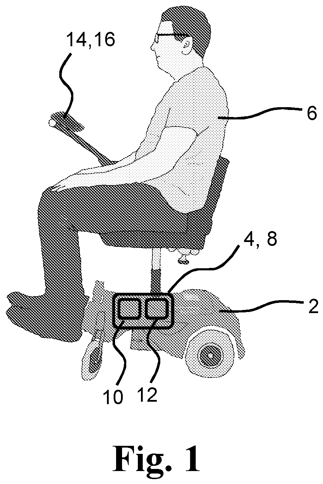

Fig. 1 shows a wheelchair 2 comprising a wheelchair control system 4 mounted on the wheelchair 2. The user 6 of the wheelchair controls movement of the wheelchair 2 using the wheelchair control system 4.

The wheelchair control system 4 comprises an eye control system 8 comprising an eye controller 10, and an interface 12 including wheelchair interface. The wheelchair control system 4 comprises an eye tracking device 14 connected to the eye control system 8, wherein the eye tracking device 14 is configured to obtain eye tracking data of the user 6 of the wheelchair with the eye tracking device 14. Further, the wheelchair control system 4 comprises a feedback device 16. The eye controller 10 is configured to determine a wheelchair control signal Xwheel and a feedback control signal Xfeedback based on the eye tracking data ETD. The eye controller 10 is configured to transmit the wheelchair control signal to the wheelchair 2 via the wheelchair interface 12; and transmit the feedback control signal to the feedback device 16. The eye tracking device 14 and the feedback device are incorporated in the same housing. Thus, a compact and simple system is provided.

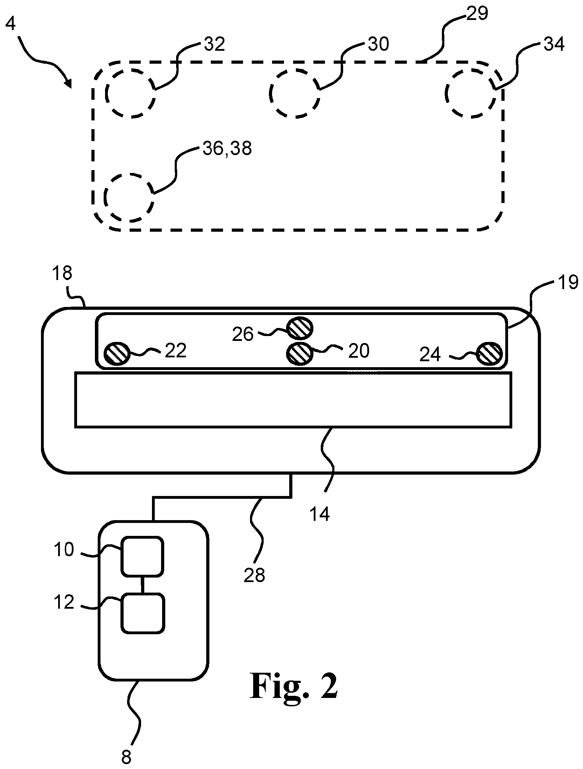

Fig. 2 shows an exemplary wheelchair control system 4. A housing 18 accommodates the eye tracking device 14 and the feedback device. The feedback device has a feedback area 19 and comprises a first visual feedback indicator 20, second visual feedback indicator 22, third visual feedback indicator 24, and status visual feedback indicator 26 within the feedback area 19. Visual feedback indicators 20, 22, 24, 26 are embodied as light emitting diodes. The eye tracking device 14 is configured to obtain eye tracking data of a user of the wheelchair and forward to the eye controller via wire connection 28.

The eye controller 10 determines a wheelchair control signal and a feedback control signal based on the eye tracking data, wherein determining a wheelchair control signal and a feedback control signal based on the eye tracking data comprises determining if the eye tracking data fulfils an input criterion.

The input criterion comprises a first input criterion, wherein the first input criterion is fulfilled if the eye tracking data are indicative of the user focusing on a first input area 30 of input area 29 for at least a first activation time period of 200 ms. If the first input criterion is met, the eye controller 10 moves the wheelchair in a first direction being a forward direction by transmitting an appropriate wheelchair control signal to the wheelchair controller. If the eye tracking data are indicative of the user removing his focus from the first input area 30, the eye controller 10 stops the wheelchair by transmitting an appropriate wheelchair control signal to the wheelchair controller.

Further, the eye controller 10 provides feedback to the user by sending a control signal to the feedback unit. If the eye tracking data are indicative of a user input, where the user focuses on the first input area 30 for at least a first initiation time period of 40 ms, the eye controller controls the first visual feedback indicator 20 to provide a first initial feedback signal. Further, if the eye tracking data are indicative of a user input, where the user focuses on the first input area 30 for at least a first primary time period of 200 ms, eye controller controls the first visual feedback indicator 20 to provide a first primary feedback signal. Thus, the feedback device provides an initial feedback signal to the user before moving the wheelchair, and provides a primary feedback signal to the user when the wheelchair is moving. When the user removes focus from the first input area 30, the first visual feedback indicator 20 is deactivated/turned off.

The input criterion comprises a second input criterion, wherein the second input criterion is fulfilled if the eye tracking data are indicative of the user focusing on a second input area 32 for at least a second activation time period of 200 ms. If the second input criterion is met, the eye controller 10 moves or turns the wheelchair in a second direction being a left direction by transmitting an appropriate wheelchair control signal to the wheelchair controller. If the eye tracking data are indicative of a user input, where the user focuses on the second input area 32 for at least a second initiation time period of 40 ms, the eye controller controls the second visual feedback indicator 22 to provide a second initial feedback signal. Further, if the eye tracking data are indicative of a user input, where the user focuses on the second input area 32 for at least a second primary time period of 200 ms, eye controller controls the second visual feedback indicator 22 to provide a second primary feedback signal. Thus, the feedback device provides an initial feedback signal to the user before moving the wheelchair, and provides a primary feedback signal to the user when the wheelchair is moving. When the user removes focus from the second input area 32, the second visual feedback indicator 22 is deactivated/turned off.

The feedback device comprises a status visual feedback indicator 26. The eye controller applies a locking mode in the eye control system if a lock input criterion is fulfilled. The lock criterion may be fulfilled if the eye tracking data are indicative of a user input, where the user focuses on a lock input area 36 for at least a lock activation time period, e.g. larger than 1 s. At the same time, the eye controller 10 controls the status visual feedback indicator 26 to provide a lock feedback signal, e.g. being a red color signal or no signal.

Further, the eye controller may switch from the lock mode to active mode of the eye control system if an unlock criterion is fulfilled. The unlock criterion may be fulfilled if the eye tracking data are indicative of a user input, where the user focuses on an unlock input area 38 for at least an unlock activation time period, e.g. larger than 1 s. At the same time, the eye controller 10 controls the status visual feedback indicator 26 to provide an unlock feedback signal, e.g. being a green colour signal.

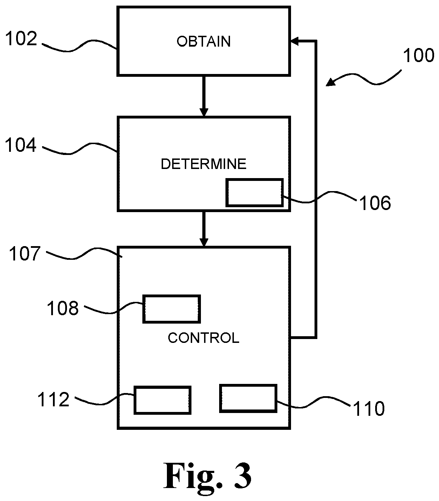

Fig. 3 shows a flow diagram of a method for controlling a wheelchair with an eye control system comprising an eye tracking device mounted on the wheelchair, and a feedback device with a feedback area. The method 100 comprises obtaining 102 eye tracking data of a user of the wheelchair with the eye tracking device; determining 104 a wheelchair control signal and a feedback control signal based on the eye tracking data, wherein determining a wheelchair control signal and a feedback control signal based on the eye tracking data comprises determining 106 if the eye tracking data fulfils an input criterion, wherein the input criterion is fulfilled if the eye tracking data are indicative of the user focusing on an input area, wherein the input area is separate from the feedback area. The method proceeds to controlling 107 the wheelchair and the feedback device according to the wheelchair control signal and the feedback control signal, including moving 108 the wheelchair according to the wheelchair control signal; and providing 110 visual and/or haptic feedback to the user in the feedback area according to the feedback control signal.

Moving 108 the wheelchair comprises moving the wheelchair forward if a first input criterion is fulfilled, wherein the first input criterion is fulfilled if the eye tracking data are indicative of the user focusing on a first input area for at least a first activation time period, e.g. of 200 ms or 400 ms. The method comprises stopping 112 the wheelchair if the eye tracking data are indicative of the user removing the focus from the first input area.

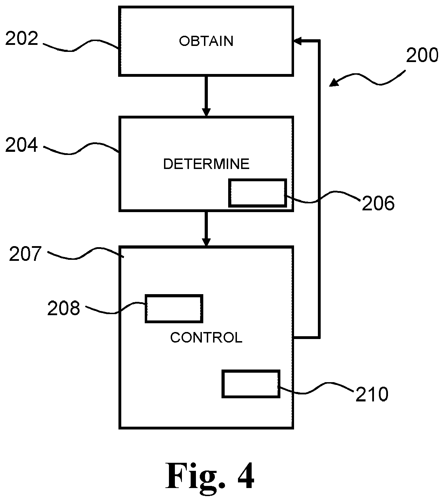

Fig. 4 is a flow diagram of an exemplary method for controlling a feeding robot with an eye control system comprising an eye tracking device and a feedback device with a feedback area. The eye tracking device may be mounted on the eating robot or in the vicinity thereof, such as on a table or plate. The eye tracking device is suitably arranged to track the eye movements of the user of the eating robot.

The method 200 comprises obtaining 202 eye tracking data of a user of the feeding robot with the eye tracking device; determining 204 a feeding robot control signal and a feedback control signal based on the eye tracking data, wherein determining a feeding robot control signal and a feedback control signal based on the eye tracking data comprises determining 206 if the eye tracking data fulfils a first input criterion, wherein the first input criterion is fulfilled if the eye tracking data are indicative of the user focusing on a point within an input area; controlling 207 the feeding robot and the feedback device, wherein controlling 207 comprises moving 208 a feeding robot arm according to the feeding robot control signal and providing 210 feedback to the user in the feedback area according to the feedback control signal.

In the method 200, moving 208 a feeding robot arm may comprise activating programmed movements of the feeding robot. A programmed movement may comprise picking a food item and/or feeding the food item to the user.

Moving 208 the feeding robot arm may comprise moving the feeding robot arm, e.g. towards a first position on a plate corresponding to the first input area, if a first input criterion is fulfilled, wherein the first input criterion is fulfilled if the eye tracking data are indicative of the user focusing on a first input area, e.g. for at least a first activation time period.

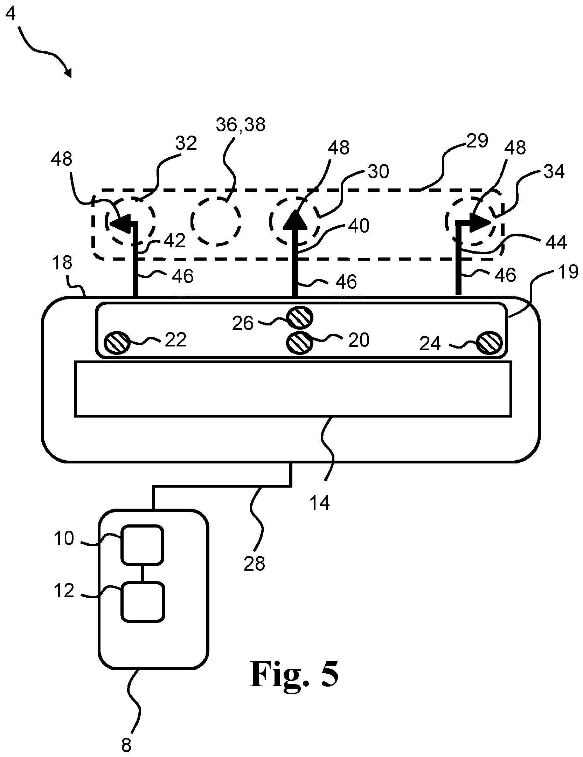

Fig. 5 shows an exemplary wheelchair control system 4A. In addition to features already described in relation to Fig. 2, the wheelchair control system 4A comprises one or more vision guides, including first vision guide 40, second vision guide 42, and third vision guide 44, mounted or mountable to the housing 18. Each vision guide comprises a rod 46 a first end mounted to or mountable to the housing 18. Further, each vision guide 40, 42, 44 comprises a respective marker element 48 arranged at a second end of the elongated member 46. The marker elements48 are arranged in respective input areas 30, 32, 34 to assist the user in providing the desired input. The elongated members in form of rods 46 each have a length of at least 4 cm. Different vision guides may have different lengths.

The use of the terms "first", "second", "third" and "fourth", "primary", "secondary" etc. does not imply any order, but are included to identify individual elements. Moreover, the use of the terms first, second, etc. does not denote any order or importance, but rather the terms first, second, etc. are used to distinguish one element from another. Note that the words first and second are used here and elsewhere for labelling purposes only and are not intended to denote any specific spatial or temporal ordering. Furthermore, the labelling of a first element does not imply the presence of a second element and vice versa.

### LIST OF REFERENCES

- 2: wheelchair
- 4: wheelchair control system
- 6: user of the wheelchair
- 8: eye control system
- 10: eye controller
- 12: interface
- 14: eye tracking device
- 16: feedback device
- 18: housing
- 19: feedback area
- 20: first visual feedback indicator
- 22: second visual feedback indicator
- 24: third visual feedback indicator
- 26: status visual feedback indicator
- 28: wire connection
- 29: input area
- 30: first input area
- 32: second input area
- 34: third input area
- 36: lock input area
- 38: unlock input area
- 40: first vision guide
- 42: second vision guide
- 44: third vision guide
- 46: rod
- 48: marker element
- 100: method for controlling a wheelchair with an eye control system
- 102: obtaining eye tracking data
- 104: determining a wheelchair control signal and a feedback control signal based on the eye tracking data
- 106: determining if the eye tracking data fulfils an input criterion
- 107: controlling the wheelchair and the feedback device
- 108: moving the wheelchair according to the wheelchair control signal
- 110: providing feedback to the user in the feedback area according to the feedback control signal
- 112: stopping the wheelchair
- 200: method for controlling a feeding robot
- 202: obtaining eye tracking data
- 204: determining a feeding robot control signal and a feedback control signal
- 206: determining if the eye tracking data fulfils an input criterion
- 207: controlling 207 the feeding robot and the feedback device
- 208: moving a feeding robot arm according to the feeding robot control signal
- 210: providing feedback to the user in the feedback area

## Claims

1. Method for controlling a wheelchair (2) with an eye control system (8) comprising an eye tracking device (14) mounted on the wheelchair, and a feedback device (16) with a feedback area (19), wherein the method comprises:
- obtaining eye tracking data of a user of the wheelchair with the eye tracking device;
- determining a wheelchair control signal and a feedback control signal based on the eye tracking data, wherein determining a wheelchair control signal and a feedback control signal based on the eye tracking data comprises determining if the eye tracking data fulfils an input criterion, wherein the input criterion is fulfilled if the eye tracking data are indicative of the user focusing on an input area (29), wherein the input area is separate from the feedback area;
- moving the wheelchair according to the wheelchair control signal; and
- providing feedback to the user in the feedback area according to the feedback control signal.

2. Method according to claim 1, wherein moving the wheelchair comprises moving the wheelchair forward if a first input criterion is fulfilled, wherein the first input criterion is fulfilled if the eye tracking data are indicative of the user focusing on a first input area for at least a first activation time period.

3. Method according to claim 2, wherein the method comprises stopping the wheelchair if the eye tracking data are indicative of the user removing the focus from the first input area.

4. Method according to any of claims 1-3, wherein providing feedback to the user in the feedback area comprises providing a visual feedback to the user.

5. Method according to any of claims 1-4, wherein providing feedback to the user in the feedback area comprises providing a haptic feedback to the user.

6. Method according to any of claims 1-5, wherein providing feedback to the user comprises providing a first initial feedback signal if the eye tracking data are indicative of a user input, where the user focuses on a first input area for at least a first initiation time period.

7. Method according to any of claims 1-6, wherein providing feedback to the user comprises providing a first primary feedback signal if the eye tracking data are indicative of a user input, where the user focuses on a first input area for at least a first primary time period.

8. Method according to claim 6 or claim 7, wherein one or more of the first initial feedback signal and the first primary feedback signal is a visual feedback signal having a first colour.

9. Method according to any of claims 1-8, wherein moving the wheelchair according to the wheelchair control signal comprises transmitting the wheelchair control signal to a controller interface of a wheelchair controller.

10. Method according to any of claims 1-9, wherein the method comprises applying a locking mode in the eye control system if a lock input criterion is fulfilled and the eye tracking data are indicative of a user input, where the user focuses on a lock input area for at least a lock activation time period.

11. Method according to claim 10, wherein the method comprises switching from the lock mode to active mode of the eye control system if an unlock criterion is fulfilled and the eye tracking data are indicative of a user input, where the user focuses on an unlock input area for at least an unlock activation time period.

12. A wheelchair control system (4) for mounting on a wheelchair, the wheelchair control system comprising an eye tracking device (14), and an eye control system (8) comprising an eye controller (10) and a wheelchair interface (12), and, wherein the eye tracking device is configured to:
- obtain eye tracking data of a user of the wheelchair, and
wherein the eye controller is configured to:
- determine a wheelchair control signal and a feedback control signal based on the eye tracking data, wherein to determine a wheelchair control signal and a feedback control signal based on the eye tracking data comprises determining if the eye tracking data fulfils an input criterion, wherein the input criterion is fulfilled if the eye tracking data are indicative of the user focusing on an input area (29), wherein the input area is separate from a feedback area of a feedback device;
- transmit the wheelchair control signal to the wheelchair via the wheelchair interface; and
- transmit the feedback control signal to the feedback device.

13. A wheelchair control system according to claim 12, wherein the wheelchair control system comprises the feedback device, wherein the feedback device is configured to provide feedback to the user in the feedback area according to the feedback control signal.

14. A wheelchair comprising a wheelchair control system according to any of claims 12-13.

## Patentansprüche

1. Verfahren zum Steuern eines Rollstuhls (2) mit einem Augensteuerungssystem (8), das eine am Rollstuhl montierte Augenverfolgungsvorrichtung (14) und eine Rückmeldungsvorrichtung (16) mit einem Rückmeldungsbereich (19) umfasst, wobei das Verfahren umfasst:
- Erhalten von Augenverfolgungsdaten eines Benutzers des Rollstuhls mit der Augenverfolgungsvorrichtung;
- Bestimmen eines Rollstuhl-Steuersignals und eines Rückmeldungs-Steuersignals auf Basis der Augenverfolgungsdaten, wobei das Bestimmen eines Rollstuhl-Steuersignals und eines Rückmeldungs-Steuersignals auf Basis der Augenverfolgungsdaten das Bestimmen umfasst, ob die Augenverfolgungsdaten ein Eingabekriterium erfüllen, wobei das Eingabekriterium erfüllt ist, wenn die Augenverfolgungsdaten darauf hinweisen, dass der Benutzer einen Eingabebereich (29) fixiert, wobei der Eingabebereich vom Rückmeldungsbereich getrennt ist;
- Bewegen des Rollstuhls gemäß dem Rollstuhl-Steuersignal; und
- Bereitstellen von Rückmeldung für den Benutzer im Rückmeldungsbereich gemäß dem Rückmeldungs-Steuersignal.

2. Verfahren nach Anspruch 1, wobei das Bewegen des Rollstuhls das Vorwärtsbewegen des Rollstuhls umfasst, wenn ein erstes Eingabekriterium erfüllt ist, wobei das erste Eingabekriterium erfüllt ist, wenn die Augenverfolgungsdaten darauf hinweisen, dass der Benutzer mindestens einen ersten Aktivierungszeitraum lang einen ersten Eingabebereich fixiert.

3. Verfahren nach Anspruch 2, wobei das Verfahren das Anhalten des Rollstuhls umfasst, wenn die Augenverfolgungsdaten darauf hinweisen, dass der Benutzer die Fixierung vom ersten Eingabebereich wegnimmt.

4. Verfahren nach einem der Ansprüche 1-3, wobei das Bereitstellen von Rückmeldung für den Benutzer im Rückmeldungsbereich das Bereitstellen einer visuellen Rückmeldung für den Benutzer umfasst.

5. Verfahren nach einem der Ansprüche 1-4, wobei das Bereitstellen von Rückmeldung für den Benutzer im Rückmeldungsbereich das Bereitstellen einer haptischen Rückmeldung für den Benutzer umfasst.

6. Verfahren nach einem der Ansprüche 1-5, wobei das Bereitstellen von Rückmeldung für den Benutzer das Bereitstellen eines ersten initialen Rückmeldungssignals umfasst, wenn die Augenverfolgungsdaten auf eine Benutzereingabe hinweisen, bei der der Benutzer mindestens einen ersten Initiierungszeitraum lang einen ersten Eingabebereich fixiert.

7. Verfahren nach einem der Ansprüche 1-6, wobei das Bereitstellen von Rückmeldung für den Benutzer das Bereitstellen eines ersten primären Rückmeldungssignals umfasst, wenn die Augenverfolgungsdaten auf eine Benutzereingabe hinweisen, bei der der Benutzer mindestens einen ersten primären Zeitraum lang einen ersten Eingabebereich fixiert.

8. Verfahren nach Anspruch 6 oder Anspruch 7, wobei es sich bei einem oder mehreren aus dem ersten initialen Rückmeldungssignal und dem ersten primären Rückmeldungssignal um ein visuelles Rückmeldungssignal mit einer ersten Farbe handelt.

9. Verfahren nach einem der Ansprüche 1-8, wobei das Bewegen des Rollstuhls gemäß dem Rollstuhl-Steuersignal das Übertragen des Rollstuhl-Steuersignals an eine Steuereinheitsschnittstelle einer Rollstuhlsteuereinheit umfasst.

10. Verfahren nach einem der Ansprüche 1-9, wobei das Verfahren das Anwenden eines Verriegelungsmodus im Augensteuerungssystem umfasst, wenn ein Verriegelungs-Eingabekriterium erfüllt ist und die Augenverfolgungsdaten auf eine Benutzereingabe hinweisen, bei der der Benutzer mindestens einen Verriegelungs-Aktivierungszeitraum lang einen Verriegelungs-Eingabebereich fixiert.

11. Verfahren nach Anspruch 10, wobei das Verfahren das Umschalten vom Verriegelungsmodus in den aktiven Modus des Augensteuerungssystems umfasst, wenn ein Entriegelungskriterium erfüllt ist und die Augenverfolgungsdaten auf eine Benutzereingabe hinweisen, bei der der Benutzer mindestens einen Entriegelungs-Aktivierungszeitraum lang einen Entriegelungs-Eingabebereich fixiert.

12. Rollstuhlsteuerungssystem (4) zum Montieren an einem Rollstuhl, wobei das Rollstuhlsteuerungssystem eine Augenverfolgungsvorrichtung (14) und ein Augensteuerungssystem (8) umfasst, das eine Augensteuereinheit (10) und eine Rollstuhlschnittstelle (12) umfasst, und wobei die Augenverfolgungsvorrichtung dazu ausgelegt ist:
- Augenverfolgungsdaten eines Benutzers des Rollstuhls zu erhalten, und wobei die Augensteuereinheit dazu ausgelegt ist:
- auf Basis der Augenverfolgungsdaten ein Rollstuhl-Steuersignal und ein Rückmeldungs-Steuersignal zu bestimmen, wobei auf Basis der Augenverfolgungsdaten ein Rollstuhl-Steuersignal und ein Rückmeldungs-Steuersignal zu bestimmen das Bestimmen umfasst, ob die Augenverfolgungsdaten ein Eingabekriterium erfüllen, wobei das Eingabekriterium erfüllt ist, wenn die Augenverfolgungsdaten darauf hinweisen, dass der Benutzer einen Eingabebereich (29) fixiert, wobei der Eingabebereich von einem Rückmeldungsbereich einer Rückmeldungsvorrichtung getrennt ist;
- das Rollstuhl-Steuersignal über die Rollstuhlschnittstelle an den Rollstuhl zu übertragen; und
- das Rückmeldungs-Steuersignal an die Rückmeldungsvorrichtung zu übertragen.

13. Rollstuhlsteuerungssystem nach Anspruch 12, wobei das Rollstuhlsteuerungssystem die Rückmeldungsvorrichtung umfasst, wobei die Rückmeldungsvorrichtung so ausgelegt ist, dass sie im Rückmeldungsbereich gemäß dem Rückmeldungs-Steuersignal Rückmeldung für den Benutzer bereitstellt.

14. Rollstuhl, der ein Rollstuhlsteuerungssystem nach einem der Ansprüche 12-13 umfasst.

## Revendications

1. Procédé de commande d'un fauteuil roulant (2) avec un système de commande oculaire (8) comprenant un dispositif de suivi oculaire (14) monté sur le fauteuil roulant, et un dispositif de rétroaction (16) avec une zone de rétroaction (19), dans lequel le procédé comprend :
- l'obtention de données de suivi oculaire d'un utilisateur du fauteuil roulant avec le dispositif de suivi oculaire ;
- la détermination d'un signal de commande de fauteuil roulant et d'un signal de commande de rétroaction en fonction des données de suivi oculaire, dans lequel la détermination d'un signal de commande de fauteuil roulant et d'un signal de commande de rétroaction en fonction des données de suivi oculaire comprend la détermination de si les données de suivi oculaire remplissent un critère d'entrée, dans lequel le critère d'entrée est rempli si les données de suivi oculaire indiquent que l'utilisateur se concentre sur une zone d'entrée (29), dans lequel la zone d'entrée est séparée de la zone de rétroaction ;
- le déplacement du fauteuil roulant selon le signal de commande de fauteuil roulant ; et
- la fourniture d'une rétroaction à l'utilisateur dans la zone de rétroaction selon le signal de commande de rétroaction.

2. Procédé selon la revendication 1, dans lequel le déplacement du fauteuil roulant comprend le déplacement du fauteuil roulant vers l'avant si un premier critère d'entrée est rempli, dans lequel le premier critère d'entrée est rempli si les données de suivi oculaire indiquent que l'utilisateur se concentre sur une première zone d'entrée pendant au moins une première période d'activation.

3. Procédé selon la revendication 2, dans lequel le procédé comprend l'arrêt du fauteuil roulant si les données de suivi oculaire indiquent que l'utilisateur supprime la concentration de la première zone d'entrée.

4. Procédé selon l'une quelconque des revendications 1-3, dans lequel la fourniture d'une rétroaction à l'utilisateur dans la zone de rétroaction comprend la fourniture d'une rétroaction visuelle à l'utilisateur.

5. Procédé selon l'une quelconque des revendications 1-4, dans lequel la fourniture d'une rétroaction à l'utilisateur dans la zone de rétroaction comprend la fourniture d'une rétroaction haptique à l'utilisateur.

6. Procédé selon l'une quelconque des revendications 1-5, dans lequel la fourniture d'une rétroaction à l'utilisateur comprend la fourniture d'un premier signal de rétroaction initial si les données de suivi oculaire indiquent une entrée d'utilisateur, où l'utilisateur se concentre sur une première zone d'entrée pendant au moins une première période de lancement.

7. Procédé selon l'une quelconque des revendications 1-6, dans lequel la fourniture d'une rétroaction à l'utilisateur comprend la fourniture d'un premier signal de rétroaction primaire si les données de suivi oculaire indiquent une entrée d'utilisateur, où l'utilisateur se concentre sur une première zone d'entrée pendant au moins une première période primaire.

8. Procédé selon la revendication 6 ou la revendication 7, dans lequel un ou plusieurs parmi le premier signal de rétroaction initial et le premier signal de rétroaction primaire est un signal de rétroaction visuel présentant une première couleur.

9. Procédé selon l'une quelconque des revendications 1-8, dans lequel le déplacement du fauteuil roulant selon le signal de commande de fauteuil roulant comprend la transmission du signal de commande de fauteuil roulant à une interface de dispositif de commande d'un dispositif de commande de fauteuil roulant.

10. Procédé selon l'une quelconque des revendications 1-9, dans lequel le procédé comprend l'application d'un mode de verrouillage dans le système de commande oculaire si un critère d'entrée de verrouillage est rempli et les données de suivi oculaire indiquent une entrée d'utilisateur, où l'utilisateur se concentre sur une zone d'entrée de verrouillage pendant au moins une période d'activation de verrouillage.

11. Procédé selon la revendication 10, dans lequel le procédé comprend le passage du mode de verrouillage au mode actif du système de commande oculaire si un critère de déverrouillage est rempli et les données de suivi oculaire indiquent une entrée d'utilisateur, où l'utilisateur se concentre sur une zone d'entrée de déverrouillage pendant au moins une période d'activation de déverrouillage.

12. Système de commande de fauteuil roulant (4) à monter sur un fauteuil roulant, le système de commande de fauteuil roulant comprenant un dispositif de suivi oculaire (14), et un système de commande oculaire (8) comprenant un dispositif de commande oculaire (10) et une interface de fauteuil roulant (12), et dans lequel le dispositif de suivi oculaire est configuré pour :
- obtenir des données de suivi oculaire d'un utilisateur du fauteuil roulant, et dans lequel le dispositif de commande oculaire est configuré pour :
- déterminer un signal de commande de fauteuil roulant et un signal de commande de rétroaction en fonction des données de suivi oculaire, dans lequel le fait de déterminer un signal de commande de fauteuil roulant et un signal de commande de rétroaction en fonction des données de suivi oculaire comprend la détermination de si les données de suivi oculaire remplissent un critère d'entrée, dans lequel le critère d'entrée est rempli si les données de suivi oculaire indiquent que l'utilisateur se concentre sur une zone d'entrée (29), dans lequel la zone d'entrée est séparée d'une zone de rétroaction d'un dispositif de rétroaction ;
- transmettre le signal de commande de fauteuil roulant au fauteuil roulant par le biais de l'interface de fauteuil roulant ; et
- transmettre le signal de commande de rétroaction au dispositif de rétroaction.

13. Système de commande de fauteuil roulant selon la revendication 12, dans lequel le système de commande de fauteuil roulant comprend le dispositif de rétroaction, dans lequel le dispositif de rétroaction est configuré pour fournir une rétroaction à l'utilisateur dans la zone de rétroaction selon le signal de commande de rétroaction.

14. Fauteuil roulant comprenant un système de commande de fauteuil roulant selon l'une quelconque des revendications 12-13.
